# EUROPEAN PATENT SPECIFICATION

(11) **EP 4 048 623 B1**
(45) Date of publication and mention of the grant of the patent: **08.01.2025**
(21) Application number: 20797208.4
(22) Date of filing: 28.09.2020
(51) Int. Cl.: B66F 9/065, B66F 9/07, B66F 9/14, B65G 1/04

(54) **AUTOMATED SYSTEM FOR HANDLING CONTAINERS**
AUTOMATISIERTES SYSTEM ZUM HANDHABEN VON BEHÄLTERN
SYSTÈME AUTOMATISÉ DE MANIPULATION DE CONTENANTS

(30) Priority: 25.10.2019 IT 201900019802
(43) Date of publication of application: 31.08.2022
(73) Proprietor: LHD S.p.A., 10090 Bruino (IT)
(72) Inventor: RIVOIR, Giuliano, 10090 BRUINO (IT)
(74) Representative: Garavelli, Paolo
(86) International application number: PCT/IT2020/050235
(87) International publication number: WO 2021/079390

(56) References cited:
- WO-A1-2017/144055
- CA-A1- 2 288 535
- US-A1- 2015 081 089

## Description

The present invention refers to an automated system for handling containers, in particular for handling plastic or cardboard boxes in the field of automatic warehouses.

More in particular the invention refers to a telescopic system, typically associated with a translating-lifting device to store or withdraw containers in or to shelving.

Telescopic systems, for example telescopic forks, are known in the art and comprise thrusting means configured for thrusting containers in the shelving, or for withdrawing them, driven by actuators comprising electric moto-reducers which are installed on the telescopic system.

In order to electrically supply such actuators, electric cables are used which, to be adapted to the elongation of the telescopic system, are usually contained inside catenary-type cable holders, which catenary extends when the telescopic system is extended, while is bent when the telescopic system is retracted.

Known automated systems for handling containers however suffer from some inconveniences, as regards the length and overall sizes of the catenary cable holder.

In particular, while a telescopic system typically has a life of about 3 million cycles, a catenary cable holder made of plastics has a much shorter life, being capable of arriving at a maximum of 100,000 cycles before being replaced.

Moreover, the catenary cable holder has vertical lateral overall sizes which increase the encumbrance of the telescopic system, increasing the minimum distance which must be kept between two contiguous shelves, preventing to optimize the sizes of the automatic warehouse in case of containers with smaller sizes. For example, typical sizes of a telescopic system are 40x180 mm, which becomes 50x200 mm taking into account the encumbrance of the catenary cable holder. So that the minimum height of the shelf will be about 200 mm, with a waste of space when boxes with a smaller height must be stored.

CA-A1-2 288 535 and US-A1-2015081089 discloses an automated system according to the preamble of Claim 1.

Object of the present invention is solving the above prior art problems, by providing an automated system for handling containers which is reliable and with small overall sizes.

The above and other objects and advantages of the invention, as will result from the following description, are obtained with an automated system for handling containers as claimed in the independent claim.

Preferred embodiments and non-trivial variations of the present invention are the subject matter of the dependent claims.

It is intended that the enclosed claims are an integral part of the present description.

It will be immediately obvious that numerous variations and modifications (for example related to shape, sizes, arrangements and parts with equivalent functionality) could be made to what is described, without departing from the scope of the invention, as included in the enclosed claims.

The present invention will be better described by some preferred embodiments thereof, provided as a non-limiting example, with reference to the enclosed drawings, in which:

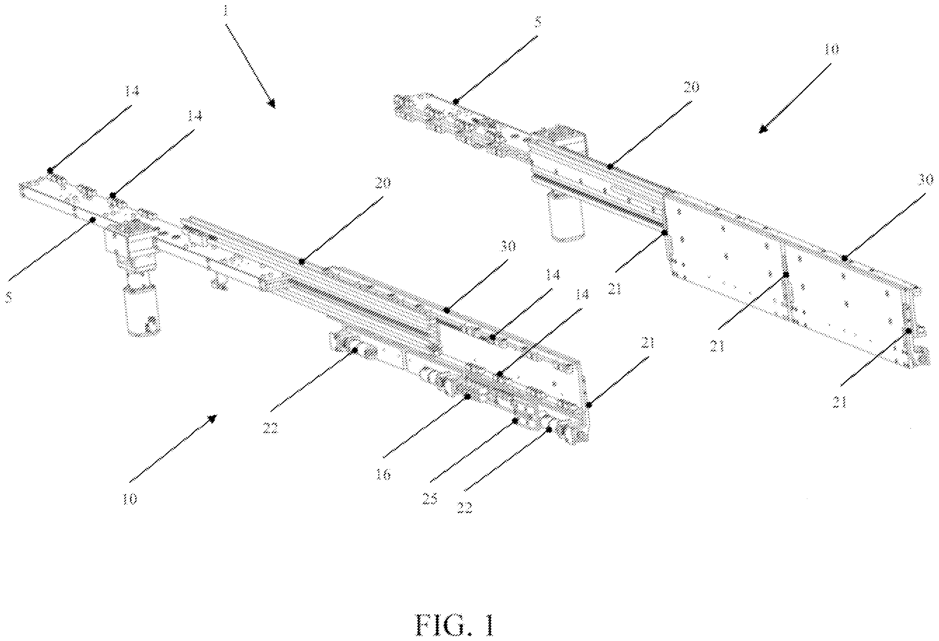

- Figure 1 shows a perspective view of an automated system for handling containers according to the invention; and

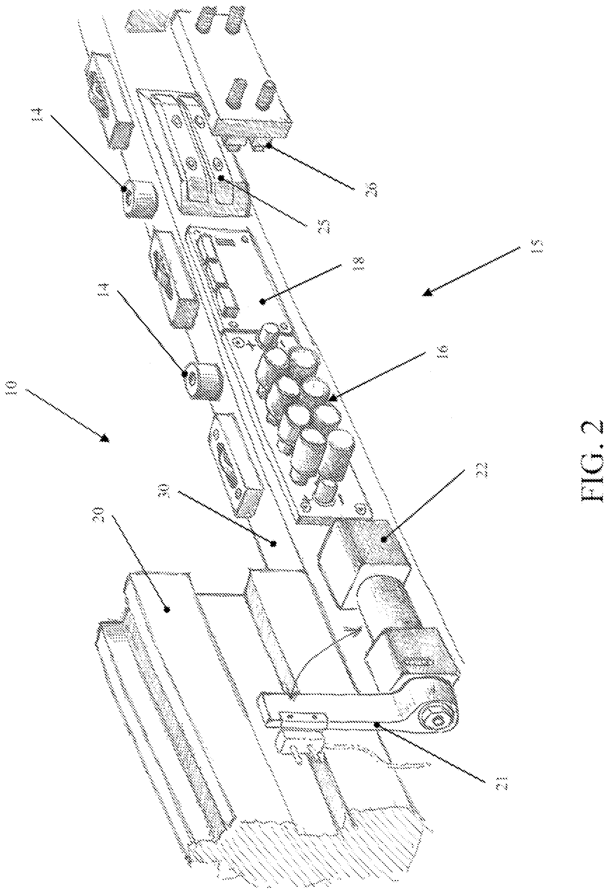

- Figure 2 shows a perspective view of an enlarged part of an automated system for handling containers according to the invention.

With reference to the Figures, a preferred embodiment of the automated system 1 for handling containers according to the present invention, is shown and described, the system 1 comprising a telescopic fork 10 of a known type, vertically arranged and comprising a fixed base 5 and at least one slider, or moving element 20, 30 telescopically sliding with respect to the fixed base 5 on a series of rollers 14 with vertical axis, connected to the base 5 and/or to the slider 20, 30, which support said at least one slider 20, 30, further comprising thrusting means 21 driven by actuators 22 and configured for thrusting the containers inside a shelving, or for withdrawing them, following the movement of the slider 20, 30 to which they are connected.

Preferably, the automated system 1 for handling containers according to the present invention comprises two telescopic forks 10 vertically arranged and mutually facing, spaced by a space useful to house a container to be thrusted in a shelving, or to withdraw it through the thrusting means 21.

The telescopic fork 10 of the automated system 1 for handling containers according to the present invention comprises, in a preferred way, an intermediate slider 20 with respect to the fixed base 5, telescopically sliding on a first series of rollers with vertical axis, supported for example by the fixed base 5, and an end slider 30, telescopically sliding with respect to the intermediate slider 20 on a second series of rollers 14 with vertical axis, supported for example by the end slider 30, which further comprises the thrusting means 21 configured for thrusting the containers in the shelving.

The actuators 22, for example electric moto-reducers, are connected to the end slider 30 and the thrusting means 21 comprise one rod, configured to project from the end slider 30, for example following a rotation by 90° around a longitudinal axis, with respect to the telescopic movement of the fork, which passes it from a vertical position, which does not project from the end slider 30, to a horizontal position, projecting from the end slider 30, which allows getting the rod 21 in contact with the container to thrust and store it on the shelf, following the telescopic sliding of the end slider 30 to which it is connected.

The end slider 30 can be, for example, a first slider or a second slider, respectively when the telescopic fork 10 of the automated handling system 1 comprises one or two telescopic sliders.

The automated handling system 1 of the invention further comprises a supplying system 15, installed on the slider, preferably on the end slider 30, to electrically supply the actuators 22 of the thrusting means 21; said supplying system 15 comprising energy accumulating means 16, for example installed on an electronic card, preferably a battery of capacitors 16, configured to store the electric energy to supply the electric moto-reducers 22, for example to provide the necessary power to supply ten rotation cycles of said rrt one rod 21.

In a preferred way, said supplying system 15, in particular the electronic card, further comprises sliding contacts 25 of a known type to connect the energy accumulating means 16 to an external electric supply 26, in particular also comprising the sliding contacts, in order to re-charge them when the slider goes back to its initial position, with the telescopic fork 10 retracted.

The supplying system 15, in particular the electronic card, further comprises a wireless connecting module 18, for example of the Bluetooth type, configured to transmit the commands to the actuators 22 of the thrusting means 21.

The automated handling system 1 of the invention further comprises actuating means of the sliders 20, 30 of a known type, for example comprising chains and/or rack-type mechanisms configured to transfer the motion from motor means to the sliders 20, 30, and a control system of the motor means, of the position or of the limit stroke of the sliders 20, 30, comprising a logic control unit, also known.

Advantageously, the automated handling system of the invention allows making a reliable system, with a life of three million cycles, with reduced overall sizes, which allow recovering useful space between the shelves of the automated handling system, which allows in particular to optimize the space for containers with reduced sizes.

## Claims

1. Automated system (1) for handling containers comprising: a vertically arranged, telescopic fork (10) which comprises a fixed base (5) and at least one slider (20, 30) telescopically sliding with respect to the fixed base (5) on a series of rollers (14) which support said at least one slider (20, 30), further comprising thrusting means (21) driven by actuators (22) and configured for thrusting the containers inside a shelving, or for extracting them, following the movement of the slider (20, 30) to which they are connected, said automated handling system (1) further comprising a supplying system (15), installed on the slider (30) to electrically supply the actuators (22) of the thrusting means (21), said supplying system (15) comprising energy accumulating means (16) configured to store the electric energy for supplying the actuators (22), the actuators (22) being connected to the slider (30), **characterized in that** each thrusting means (21) comprise one rod configured to project from an end slider (30), comprised by the slider (20, 30), to which the rod (21) is connected, each rod (21) passing from a first position, which does not project from the slider (30), to a second projecting position which allows getting the rod (21) in contact with the container to thrust and store it in the shelf, following the telescopic sliding of the slider (30) to which it is connected.

2. Automated system (1) for handling containers according to claim 1, **characterized in that** said supplying system (15) further comprises sliding contacts (25) configured to connect the energy accumulating means (16) to an external electric supply (26), in order to re-charge them when the slider goes back to its initial position, with the telescopic fork (10) retracted.

3. Automated system (1) for handling containers according to claim 1 or 2, **characterized in that** the energy accumulating means (16) are a battery of capacitors.

4. Automated system (1) for handling containers according to any one of the previous claims, **characterized in that** it comprises two telescopic forks (10), vertically arranged and mutually facing, spaced by a space useful to house a container to be thrust in a shelving, or to remove it therefrom through the thrusting means (21).

5. Automated system (1) for handling containers according to claim 1, **characterized in that** the actuators (22) are electric moto-reducers.

6. Automated system (1) for handling containers according to claim 1 or 5, **characterized in that** the rod (21) is configured to project from the end slider (30) following a rotation around a longitudinal axis with respect to the telescopic movement of the fork.

7. Automated system (1) for handling containers according to any one of the previous claims, **characterized in that** it further comprises a wireless connecting module (18) configured for transmitting the commands to the actuators (22) of the thrusting means (21) .

8. Automated system (1) for handling containers according to any one of the previous claims, **characterized in that** the telescopic fork (10) comprises an intermediate slider (20), telescopically sliding on a first series of rollers with respect to the fixed base (5), and an end slider (30), telescopically sliding on a second series of rollers (14) with respect to the intermedia slider (20), said actuators (22) being connected to the end slider (30) which further comprises the supplying system (15) and the thrusting means (21) configured for thrusting the containers in the shelving.

## Patentansprüche

1. Automatisiertes Behälterhandhabungssystem (1), umfassend: eine vertikal angeordnete Teleskopgabel (10), die eine feste Basis (5) und mindestens einen Schlitten (20, 30) umfasst, der bezüglich der festen Basis (5) teleskopartig verschiebbar ist Reihe von Rädern (14), die die mindestens eine Rutsche (20, 30) tragen, ferner umfassend Schiebemittel (21), die von Aktoren (22) gesteuert werden und so konfiguriert sind, dass sie die Behälter in die Regale schieben oder aus ihnen herausnehmen, indem sie dem folgen Bewegung des Schlittens (20, 30), mit dem sie verbunden sind, wobei das automatisierte Behälterhandhabungssystem (1) außerdem ein Energiesystem (15) umfasst, das auf dem Schlitten (30) installiert ist, um die Stellglieder (22) der Mittel elektrisch anzutreiben Schub (21), wobei das Energiesystem (15) Energiespeichermittel (16) umfasst, die so konfiguriert sind, dass sie die elektrische Energie zum Antreiben der elektrischen Getriebemotoren (22) speichern, wobei die Aktuatoren (22) mit dem Schlitten (30) verbunden sind, **dadurch gekennzeichnet dass** jedes der Schiebemittel (21) eine Stange umfasst, die so konfiguriert ist, dass sie von einem Endschlitten (30) vorsteht, der von dem Schlitten (20, 30) umfasst ist, mit dem die Stange (21) verbunden ist, wobei jede Stange (21) von einem ausgeht von der ersten Position, die nicht über den Schieber (30) hinausragt, in eine zweite hervorstehende Position, die es der Stange (21) ermöglicht, mit dem Behälter in Kontakt zu kommen, um ihn zu schieben und auf dem Regal zu lagern, nachdem der Schieber teleskopisch verschoben wurde (30), mit dem es verbunden ist.

2. Automatisiertes Behälterhandhabungssystem (1) nach Anspruch 1, **dadurch gekennzeichnet, dass** das Zuführsystem (15) außerdem Schleifkontakte (25) aufweist, die dazu konfiguriert sind, die Energiespeichereinrichtung (16) mit einer externen elektrischen Stromversorgung (26) zu verbinden, um sie wieder aufzuladen, wenn der Schlitten bei eingefahrener Teleskopgabel (10) in die Ausgangsposition zurückkehrt.

3. Automatisiertes Behälterhandhabungssystem (1) nach Anspruch 1 oder 2, **dadurch gekennzeichnet, dass** die Energiespeichermittel (16) eine Batterie aus Kondensatoren sind.

4. Automatisiertes Behälterhandhabungssystem (1) nach einem der vorhergehenden Ansprüche, **dadurch gekennzeichnet, dass** es zwei vertikal angeordnete und einander zugewandte Teleskopgabeln (10) aufweist, die durch einen nutzbaren Raum voneinander beabstandet sind, um einen Container aufzunehmen, der hineingeschoben werden soll aus dem Regal herauszuziehen oder mit der Schubvorrichtung (21) daraus herauszuziehen.

5. Automatisiertes Behälterhandhabungssystem (1) nach Anspruch 1, **dadurch gekennzeichnet, dass** die Aktoren (22) elektrische Getriebemotoren sind.

6. Automatisiertes Behälterhandhabungssystem (1) nach Anspruch 1 oder 5, **dadurch gekennzeichnet, dass** die Stange (21) dazu ausgebildet ist, aus dem Endschlitten (30) nach einer Drehung um eine Längsachse bezüglich der Teleskopbewegung herauszuragen die Gabel.

7. Automatisiertes Behälterhandhabungssystem (1) nach einem der vorhergehenden Ansprüche, **dadurch gekennzeichnet, dass** es außerdem ein drahtloses Verbindungsmodul (18) umfasst, das so konfiguriert ist, dass es Befehle an die Aktoren (22) der Schubmittel (21) überträgt.

8. Automatisiertes Behälterhandhabungssystem (1) nach einem der vorhergehenden Ansprüche, **dadurch gekennzeichnet, dass** die Teleskopgabel (10) einen Zwischenschlitten (20) umfasst, der auf einer ersten Reihe von Rädern in Bezug auf die feste Basis teleskopartig verschiebbar ist ( 5) und einen Endschlitten (30), der auf einer zweiten Reihe von Rädern (14) in Bezug auf den Zwischenschlitten (20) teleskopisch verschiebbar ist, wobei die Stellglieder (22) mit dem Endschlitten (30) verbunden sind, der auch die enthält Zuführmittel (15) und Schiebemittel (21), die dazu konfiguriert sind, die Behälter in das Regal zu schieben.

## Revendications

1. Système automatisé de manutention de conteneurs (1) comprenant: une fourche télescopique (10) disposée verticalement qui comprend un socle fixe (5) et au moins un coulisseau (20, 30) coulissant télescopiquement par rapport au socle fixe (5) sur un série de roues (14) qui supportent ledit au moins un coulisseau (20, 30), comprenant en outre des moyens de poussée (21) commandés par des actionneurs (22) et configurés pour pousser les conteneurs dans les rayonnages, ou pour les en extraire, suite à l'action mouvement du coulisseau (20, 30) auquel ils sont reliés, ledit système de déplacement automatisé (1) comprenant également un système d'alimentation (15), installé sur le coulisseau (30) pour alimenter électriquement les actionneurs (22) des moyens de poussée (21), ledit système d'alimentation (15) comprenant des moyens de stockage d'énergie (16) configurés pour stocker l'énergie électrique pour alimenter les moto-réducteurs électriques (22), les actionneurs (22) étant reliés au coulisseau (30), caractérisé en que chacun des moyens de poussée (21) comprend une tige configurée pour faire saillie d'un coulisseau d'extrémité (30), inclus dans le coulisseau (20, 30) auquel la tige (21) est reliée, chaque tige (21) passant d'un première position, qui ne dépasse pas du coulisseau (30), à une deuxième position saillante qui permet à la tige (21) d'entrer en contact avec le récipient pour le pousser et le ranger sur l'étagère, suite au coulissement télescopique du coulisseau (30) auquel il est connecté.

2. Système automatisé de manutention de conteneurs (1) selon la revendication 1, **caractérisé en ce que** ledit système d'alimentation (15) comprend en outre des contacts glissants (25) configurés pour connecter les moyens d'accumulation d'énergie (16) à une alimentation électrique externe (26), de manière à les recharger lorsque le coulisseau revient en position initiale, avec la fourche télescopique (10) rétractée.

3. Système automatisé de manutention de conteneurs (1) selon la revendication 1 ou 2, **caractérisé en ce que** les moyens de stockage d'énergie (16) sont une batterie de condensateurs.

4. Système automatisé de manutention de conteneurs (1) selon l'une quelconque des revendications précédentes, **caractérisé en ce qu'**il comprend deux fourches télescopiques (10) disposées verticalement et face à face, espacées d'un espace utile pour accueillir un conteneur à pousser dans un étagère, ou de l'en extraire à l'aide des moyens de poussée (21).

5. Système automatisé de manutention de conteneurs (1) selon la revendication 1, **caractérisé en ce que** les actionneurs (22) sont des moto-réducteurs électriques.

6. Système automatisé de manutention de conteneurs (1) selon la revendication 1 ou 5, **caractérisé en ce que** la tige (21) est configurée pour dépasser de la glissière d'extrémité (30) suite à une rotation autour d'un axe longitudinal par rapport au mouvement télescopique de la fourchette.

7. Système automatisé de manutention de conteneurs (1) selon l'une quelconque des revendications précédentes, **caractérisé en ce qu'**il comprend en outre un module de connexion sans fil (18) configuré pour transmettre des commandes aux actionneurs (22) des moyens de poussée (21).

8. Système automatisé (1) de manutention de conteneurs selon l'une quelconque des revendications précédentes, **caractérisé en ce que** la fourche télescopique (10) comprend un coulisseau intermédiaire (20), coulissant télescopiquement sur une première série de roues par rapport au socle fixe (5), et un coulisseau d'extrémité (30), coulissant télescopiquement sur une deuxième série de roulettes (14) par rapport au coulisseau intermédiaire (20), lesdits actionneurs (22) étant reliés au coulisseau d'extrémité (30) qui comporte également le d'alimentation (15) et les moyens de poussée (21) configurés pour pousser les conteneurs dans l'étagère.
